# EUROPEAN PATENT SPECIFICATION

(11) **EP 3 462 914 B1**
(45) Date of publication and mention of the grant of the patent: **14.08.2019**
(21) Application number: 17725916.5
(22) Date of filing: 16.05.2017
(51) Int. Cl.: A23L 29/212, A23L 2/39, C08L 1/02, A23L 29/231, A23L 29/262, A23L 19/00, A23L 23/10

(54) **A PARTICULATE INSTANT FOOD PRODUCT COMPRISING MICROFIBRILLATED CELLULOSE**
TEILCHENFÖRMIGES INSTANT-LEBENSMITTEL MIT MIKROFIBRILLIERTER CELLULOSE
PRODUIT ALIMENTAIRE INSTANTANÉ PARTICULAIRE CONTENANT DE LA CELLULOSE MICROFIBRILLÉE

(30) Priority: 02.06.2016 EP 16172653
(43) Date of publication of application: 10.04.2019
(73) Proprietor: Unilever N.V., 3013 AL Rotterdam (NL); Unilever PLC, London, Greater London EC4Y 0DY (GB)
(72) Inventor: SUIJKER, Michael, Jacobus, 3133 AT Vlaardingen (NL); VELIKOV, Krassimir, 3133 AT Vlaardingen (NL); VOUDOURIS, Panayiotis, 3133 AT Vlaardingen (NL)
(74) Representative: van den Brom, Coenraad Richard
(86) International application number: PCT/EP2017/061663
(87) International publication number: WO 2017/207259

(56) References cited:
- WO-A1-2012/159873
- WO-A1-2015/128155
- WO-A1-2015/181110
- WO-A1-2015/193122
- US-A- 4 341 807

## Description

### TECHNICAL FIELD OF THE INVENTION

The invention relates to a particulate instant food product comprising texturizing particles that contain microfibrillated cellulose and water-soluble filler.

The invention further relates to a process of manufacturing such a particulate instant food product.

### BACKGROUND OF THE INVENTION

Cellulose is an organic compound with the formula (C₆H₁₀O₅)n, a polysaccharide consisting of a linear chain of several hundred to many thousands of β(1→4) linked D-glucose units. Cellulose is an important structural component of the primary cell wall of green plants, many forms of algae and the oomycetes. Some species of bacteria secrete it to form biofilms. Plant-derived cellulose is usually found in a mixture with hemicellulose, lignin, pectin and other substances, while bacterial cellulose is quite pure.

Cellulose is a straight chain polymer: unlike starch, no coiling or branching occurs, and the molecule adopts an extended and rather stiff rod-like conformation, aided by the equatorial conformation of the glucose residues. The multiple hydroxyl groups on the glucose from one chain form hydrogen bonds with oxygen atoms on the same or on a neighbor chain, holding the chains firmly together side-by-side and forming microfibrils with high tensile strength. This confers tensile strength in cell walls, where cellulose microfibrils are meshed into a polysaccharide matrix.

Compared to starch, cellulose is also much more crystalline. Whereas starch undergoes a crystalline to amorphous transition when heated beyond 60-70 °C in water (as in cooking), cellulose requires a temperature of 320 °C and pressure of 25 MPa to become amorphous in water. Several different crystalline structures of cellulose are known, corresponding to the location of hydrogen bonds between and within strands.

Cellulose consists of crystalline and amorphous regions. By treating it with strong acid, the amorphous regions can be chemically broken up, thereby producing nanocrystalline cellulose.

Microfibrillated cellulose (MFC), also referred to a nanofibrillated cellulose, is the term used to describe a material that is composed of cellulose microfibrils (or cellulose nanofibrils) that can be isolated from disrupted and disentangled cellulose containing primary or secondary plant cell material or pellicles (in the case of bacterial cellulose). These cellulose microfibrils typically have a diameter of 3-70 nanometers and a length that can vary within a wide range, but usually measures several micrometers. Aqueous suspensions of MFC are pseudo-plastic and exhibit a property that is also observed in certain gels or thick (viscous) fluids, i.e. they are thick (viscous) under normal conditions, but flow (become thin, less viscous) over time when shaken, agitated, or otherwise stressed. This property is known as thixotropy. MFC can be obtained and isolated from a cellulose containing source through high-pressure, high temperature and high velocity impact homogenization, grinding or microfluidization.

US 5,964,983 describes process for the preparation of MFC from primary wall plant pulp containing cellulose, pectins, hemicelluloses, proteins and mineral materials, the process comprising the following steps:
(a) hydrolyzing the pulp with acid or base at a temperature between 60 and 100°C. partially to extract the pectins and hemicelluloses to form a suspension;
(b) recovering a solid residue from the suspension from step (a);
(c) carrying out, under alkaline conditions, a second extraction of the residue of cellulosic material from step (b), when step (a) is an acidic hydrolysis and recovering the cellulosic material residue by separating the suspension;
(d) washing the residue from step (b) or step (c);
(e) diluting the cellulosic material from step (d) in water to obtain between 2% and 10% dry matter;
(f) homogenizing the cell suspension from step (e)
wherein at least one alkaline extraction step is carried out on the cellulosic material, and the homogenizing step (f) is carried out by a high mechanical shear operation to provide a cell suspension, passing the cell suspension through a small diameter orifice, subjecting the suspension to a pressure drop of at least 20 MPa and to a high velocity shearing action followed by a high velocity decelerating impact.

US 6,231,657 describes a process for preparing a composition comprising cellulose nanofibrils, carboxycellulose as additive, and optionally, at least one co-additive, the content of additive and of optional co-additive being less than or equal to 30% by weight relative to the weight of nanofibrils and of additive and of optional co-additive, said process comprising the steps of preparing cellulose nanofibrils from cellulosic pulp by carrying out at least one extraction, optionally at least one step of bleaching of the pulp thus treated, then separating out the resulting pulp , and carrying out a homogenization step in at least one cycle, wherein the following steps are carried out:
- at least some of the additive and optionally co-additive(s) is added to the nanofibril suspension which has optionally undergone at least one homogenization cycle, and
- a step of drying the suspension thus supplemented is carried out.
Example 6 describes the preparation of a milled powder that contains 10% carboxymethyl cellulose and 20% sucrose by weight of cellulose nanofibrils.

WO 2008/062057 describes a composition suitable to substitute chemically modified starch comprising citrus fruit fiber having a water binding capacity of from 7 to 25 (w/w) and
native starch. This composition is prepared by a process comprising the steps of:
- blending citrus fruit fibers and native starch,
- treating mechanically the blend of step a) to obtain a homogeneous mixture,
- cooking the mixture under gentle stirring up to the gelatinization temperature of the starch.

WO 2010/093864 describes a method of forming a food product, comprising:
- homogenizing a combination that includes citrus pulp fiber, an edible lipid, and water to form a homogenized combination that includes 1-20 parts by weight of the lipid for each part by weight of citrus pulp fiber; and
- drying the homogenized composition to form a dry blend system.

US 6,703,497 describes a process for the preparation of a food formulation comprising the steps of:
- providing a starting food or food formulation,
- mixing said starting food or food formulation with an amount greater than 0% and less than 20% by weight, relative to the total weight of the food formulation, of a combination of amorphous cellulose microfibrils in dry form having a degree of crystallinity of less than or equal to 50%, with at least one polyhydroxylated compound, to obtain the food formulation, and
- recovering the obtained food formulation

WO 2015/128155 describes a preparation of plant parenchymal cell wall clusters, the cell wall clusters comprising at least 60 wt% of cell wall derived polysaccharides, the cell wall clusters having a
a. volumetric mass density of at least 0.1 gram/ml;
b. specific surface area (S BET) of at least 3 m2/gram; and
c. rehydrated particle size having a d(0.1) value higher than 20 micrometer and a d(0.9) value lower than 1 500 micrometer; wherein the preparation comprises up to 20 wt% of water and has a water activity (Aw) of less than 0.5.

The application of MFC in dry form in instant food products has the drawback that it can introduce a chalky or gritty mouthfeel in the reconstituted food products due to the presence of perceptible dense particles of water-insoluble material. This is particularly problematic in savoury products where the high ionic strength suppresses swelling of the MFC.

### SUMMARY OF THE INVENTION

The inventors have developed a particulate instant food product comprising microfibrillated cellulose (MFC) containing particles that provide special texture properties upon reconstitution with aqueous liquid, but without imparting a chalky or gritty mouthfeel.

The particulate instant food product of the present invention comprises 1-99 wt.% of texturizing particles having a diameter in the range of 0.5-5,000 micrometer and comprising:
- at least 3 wt.% of MFC;
- at least 20 wt.% of water-soluble filler; and
- less than 12 wt.% water;
wherein the MFC and the water-soluble filler together represent at least 40 wt.% of the texturizing particles.

The texturizing particles contained in the particulate instant food product of the present invention offer the advantage that they can easily be dispersed in hot and cold aqueous liquids and in that they impart a creamy, smooth or pulpy mouthfeel, depending on the diameter of the texturizing particles.

The texturizing particles of the present invention when dispersed in water to form soft porous particles due to the dissolution of the water-soluble filler and the cohesion between the remaining cellulose microfibrils in the hydrated texturizing particles. The impact of these soft hydrated MFC particles on the mouthfeel of the reconstituted product is very special. If the hydrated particles are very small (e.g. <30 µm) they impart a creamy mouthfeel. If the particles are relatively large (e.g. >100 µm) they impart a pulpy mouthfeel. The viscosifying effect of the MFC in the hydrated texturizing particles is limited. However, if the hydrated texturizing particles in a reconstituted aqueous food product are destroyed by e.g. high shear homogenization, the viscosity of the product is increased substantially.

The invention also relates to a process of preparing the aforementioned particulate instant food product, said process comprising:
- providing texturizing particles having a diameter in the range of 0.5-5,000 micrometer and comprising at least 5 wt.% of MFC; at least 20 wt.% of water-soluble filler; and less than 12% water; wherein the MFC and the water-soluble filler together represent at least 40 wt.% of the texturizing particles; and
- mixing the texturizing particles with one or more other particulate edible ingredients.

The invention also relates to the use of the aforementioned particulate instant food product in the preparation of an aqueous foodstuff, said use comprising mixing said particulate instant food product with aqueous liquid.

### DETAILED DESCRIPTION OF THE INVENTION

Accordingly, a first aspect of the invention relates to a particulate instant food product comprising 1-99 wt.% of texturizing particles having a diameter in the range of 0.5-5,000 micrometer and comprising:
- at least 3 wt.% of microfibrillated cellulose (MFC);
- at least 20 wt.% of water-soluble filler; and
- less than 12 wt.% water;
wherein the MFC and the water-soluble filler together represent at least 40 wt.% of the texturizing particles.

The term "instant food product" as used herein refers to a dry food product that can be reconstituted by mixing it with aqueous liquid (e.g. water, milk) and, if need be, by subsequently heating (e.g. boiling) the mixture.

The term "microfibrillated cellulose" or "MFC", as used herein, unless indicated otherwise, refers to water-insoluble cellulose microfibrils, more particularly to water-insoluble cellulose microfibrils having a length L and a mean diameter D, wherein the ratio L/D is at least 30 and D is in the range of 1-50 nm. These cellulose microfibrils are no longer meshed into a cell wall polysaccharide matrix as a result of a defibrillation treatment, e.g. high pressure homogenization.

The term "oil" as used herein refers to glycerides selected from triglycerides, diglycerides, monoglycerides, phosphoglycerides and combinations thereof. The oil can be liquid, solid or semi-solid at ambient temperature (20°C).

The term "diameter" as used herein in relation to a particle, unless indicated otherwise, refers to the average equivalent spherical diameter of said particle. Likewise, unless indicated otherwise, the term "diameter" as used herein in relation to a microfibril, refers to the average diameter of said microfibril.

The particle size distribution of the instant food product or of particulate ingredients present in the instant food product can be determined, for instance, by means of laser diffraction. Care should be taken that loose aggregates of particles are dissociated before the particle size measurements.

The particulate instant food product of the present invention preferably comprises at least 70 wt.%, more preferably at least 80 wt.% and most preferably at least 90 wt.% of particles having a diameter in the range of 10-10,000 µm.

The food product typically contains at least 1 wt.% of the texturizing particles having a diameter in the range of 2-2,000 micrometer, more preferably at least 1 wt.% of the texturizing particles having a diameter in the range of 10-1,000 micrometer.

Besides the texturizing particles the instant food product contains one or more other particulate ingredients. Examples of such particulate ingredients include particles that contain dry plant material, dry meat, salt (e.g. NaCl, KCl and monosodium glutamate), sugar (e.g. sucrose, lactose, glucose, fructose) hydrolysed protein, yeast extract, thickener, gelling agent, flavouring and combinations thereof.

The water content of the instant food product preferably does not exceed 15 wt.%, more preferably it does not exceed 12 wt.%, even more preferably it does not exceed 8 wt.%, most preferably it does not exceed 6 wt.%.

The instant food product of the present invention preferably is a savoury food product. Typically, the food product contains 3-50 wt.%, more preferably 5-40 wt.% and most preferably 8-30 wt.% of salt selected from sodium chloride, potassium chloride and combinations thereof.

According to a particularly preferred embodiment the instant food product is selected from instant soup, instant sauce, instant gravy and instant bouillon.

The instant food product of the present invention preferably is a packaged food product. The instant food product may suitably be packaged in, for instance, a sachet or a container.

The MFC that is contained in the food product typically comprises at least 80 wt.% of cellulose microfibrils having a length L and a mean diameter D, wherein the ratio L/D is at least 10 and D is in the range of 3-70 nm.

The MFC employed in accordance with the present invention preferably originates from parenchymal tissue from fruits, roots, bulbs, tubers, stalks, seeds or combination thereof. More preferably, the MFC originates from fruits.

Examples of suitable sources for MFC include citrus fruit, tomato fruit, peach fruit, pumpkin fruit, kiwi fruit, apple fruit, mango fruit, sugar beet, sugar cane, beet root, turnip, parsnip, maize, oat, wheat, peas or combinations thereof. More preferably, the MFC originates from citrus fruit, tomato fruit, sugar cane, sugar beet or a combination thereof. Most preferably, the MFC originates from citrus fruit, tomato fruit or a combination thereof.

The MFC in the texturizing particles is typically produced from parenchymal material that besides cellulose contains hemicellulose and pectin. Typically, the texturizing particles contain 0-60 wt.% of hemicellulose and pectin from the same source(s) as the MFC. More preferably, the texturizing particles contain 5-50 wt.%, most preferably 10-40 wt.% of hemicellulose and pectin from the same source(s) as the MFC.

The cellulose microfibrils of the MFC typically have a mean diameter smaller than 30 nm, more preferably smaller than 20 nm, most preferably smaller than 15 nm.

The average degree of crystallinity of the MFC typically is less than 40%, more preferably less than 35% and most preferably less than 30%.

The water-soluble filler that is contained in the texturizing particles is preferably selected from maltodextrin, sucrose, lactose, glucose, fructose, pectin, starch, salt, monosodium glutamate, sodium citrate and combinations thereof. More preferably, the water-soluble filler is selected from maltodextrin, sucrose, lactose, glucose, fructose and combinations thereof.

The instant food product of the present invention preferably comprises 3-60 wt.%, more preferably 5-50 wt.% of the texturizing particles.

The texturizing particles of the present invention preferably contain at least 5 wt.%, more preferably 8-50 wt.% and most preferably 10-40 wt.% of MFC.

The water-soluble filler typically constitutes at least 30 wt.%, more preferably 35-90 wt.% and most preferably 40-88 wt.% of the texturizing particles.

The water content of the texturizing particles preferably does not exceed 10 wt.%, more preferably it does not exceed 9 wt.% and most preferably it does not exceed 8 wt.%.

The combination of MFC and water-soluble filler preferably constitutes at least 50 wt.%, more preferably at least 60 wt.% and most preferably at least 70 wt.% of the texturizing particles.

The combination of MFC, hemicellulose, pectin and water-soluble filler preferably constitutes at least 60 wt.%, more preferably at least 70 wt.% and most preferably at least 80 wt.% of the texturizing particles.

The MFC and the water-soluble filler preferably form an intimate mixture within the texturizing particles.

According to a very preferred embodiment, the texturizing particles employed in accordance with the present invention are very homogeneous. This may be achieved by preparing a suspension of cellulose fibres and applying conditions of extremely high shear before drying the suspension. The water-soluble filler can be added before or after the application of high shear. The high shear conditions ensure that the cellulose microfibrils are largely disentangled. During drying the spaces between the spaces between the disentangled microfibrils are filled with water-soluble filler.

Microscopic images of the texturizing particles when dispersed in water of the present invention show that particles are indeed very homogeneous. This homogeneity of the particle microstructure can be quantified by measuring the orientation ("anisotropy" parameter) of the fibrils in individual particles using image analysis tools as described by Boudaoud et al. (FibrilTool, an ImageJ plug-in to quantify fibrillar structures in raw microscopy images, Nature Protocols, 2014, 9(2), 457-463. This method quantifies the anisotropy of fibril arrays within solid materials or within solid particles in dispersion, directly from raw images obtained by any form of microscopy.

The "anisotropy" parameter of the texturizing particles of the present invention is determined after these particles have been dispersed in water. The "average orientation" parameter is calculated by first determining the average of the "anisotropy" parameter per particle over its (particle's) cross section area (in pixel^2) and by subsequently averaging the outcome for all the selected particles. The exact procedure for measuring the "average orientation" parameter is described in the Examples.

Cellulose microfibrils that are present in cell walls are highly oriented (and form dense areas). In microfibrillated cellulose the cellulose microfibrils are much more randomly oriented as a result of the defibrillation. The smaller the "average orientation" parameter, the more homogeneously and disorderely the microfibrils are distributed, and the fewer dense areas are observed. The "average orientation" of cellulose microfibrils in microfibrillated cellulose is generally inversely proportional to the level of shear that was used to defibrillate the cellulose fibers.

Typically, the texturizing particles have an "average orientation" of less than 4.2×10^-6, more preferably of less than 3.5×10^-6, even more preferably of less than 3.0×10^-6 and most preferably of less than 2.8×10^-6.

The texturizing particles in the instant food product may suitably contain other ingredients besides MFC and water-soluble filler. Oil is an example of such an ingredient. According to a preferred embodiment the texturizing particles contain 0-60 wt.% of oil, more preferably 0-40 wt.% oil and most preferably 0-20 wt.% oil, wherein the combination of MFC, water-soluble filler and oil constitutes at least 70 wt.% of the texturizing particles.

In accordance with one embodiment of the instant food product preferably contains at least 0.5 wt.%, more preferably 1-60 wt.% and most preferably 5-50 wt.% of texturizing particles having a diameter in the range of 0.5-50 micrometer. The inventors have found that texturizing particles having a such a small diameter offer the advantage that upon reconstitution with aqueous liquid they form hydrated particles that impart a thick, smooth texture without being discernible as particles. Preferably, after full hydration 50-100 % of the texturizing particles have a diameter in the range of 1-50 micrometer.

According to another embodiment of the instant food product contains at least 1 wt.%, more preferably 3-60 wt.% and most preferably 5-50 wt.% of texturizing particles having a diameter of at least 50 micrometers. These relatively large texturizing particles impart a special pulpy texture after reconstitution with sufficient aqueous liquid.

Another aspect of the present invention relates to a process of preparing a particulate instant food product, especially a particulate instant food product as defined herein before, said process comprising:
- providing texturizing particles as defined herein before; and
- mixing the texturizing particles with one or more other particulate edible ingredients.

In a particularly preferred embodiment, the aforementioned process comprises the additional step of packaging the mixture of texturizing particles and other particulate edible ingredients, e.g. in a sachet or a container.

Yet another aspect of the invention relates to the use of the particulate instant food product as defined herein before in the preparation of an aqueous foodstuff, said use comprising mixing 1 part by weight of said particulate instant food product with at least 2 parts by weight of aqueous liquid.

According to one embodiment the particulate instant food product is mixed with hot aqueous liquid having a temperature of at least 50°C.

In accordance with another embodiment, the particulate instant food product is mixed with cold water having a temperature of less than 30°C. In one embodiment, the resulting mixture is subsequently heated to a temperature in excess of 70°C.

Preferably, the use comprising mixing 1 part by weight of the particulate instant food product with 4-50 parts by weight of aqueous liquid.

The aqueous liquid that is mixed with the instant food product typically contains at least 80 wt.%, more preferably at least 80 wt.% of water.

The invention is further illustrated by the following non-limiting examples.

### EXAMPLES

### Example 1

Texturizing particles composed of MFC-containing citrus fibre and sucrose (w/w ≈ 1:5) were prepared by means of spray drying.

Citrus fibre (Herbacel AQplus type N, from Herba food), sucrose and calcium phosphate were dispersed in demineralized water (20°C) using a Silverson mixer to prepare an aqueous suspension. The composition of the suspension is shown in Table 1.

**Table 1**

| | **Wt.%** |
|---|---|
| Citrus fibre | 1.50 |
| Sucrose | 7.50 |
| Calcium phosphate | 0.15 |
| Demineralized water | 90.85 |

Next, the suspension was homogenized at 900 bar using a Rannie homogenizer. The homogenized suspension was spray dried in a spray tower with an evaporation capacity of 70 to 100 kg/h (GEA, Niro) with a nozzle pressure of 250 bar.

### Example 2

To an instant asparagus soup (Knorr Spargelcreme Suppe weiß & grun, powder) that contained vegetable pieces different amounts of the texturizing particles of Example 1 (TP₉₀₀) were added.

The instant soup was whisked into cold water and brought to boil. The soup was allowed to simmer for 5-6 minutes, before being evaluated by an expert panel (evaluation of 'appearance' included stirring and pouring of the samples). The results of the evaluation are shown in Table 3 (% fiber refers to the concentration of citrus fibre in the reconstituted soup).

**Table 3**

| | **Appearance** | **Mouthfeel** |
|---|---|---|
| **Reference 1** | Thin, watery | Thin, watery |
| 0% fibre | | |
| **Sample 1** | Thicker and more smooth than reference | Good thickness and texture for soup |
| 0.3% fibre(TP₉₀₀) | | |
| **Sample 2** | Thick, sauce like | Thick, smooth |
| 0.5% fibre (TP₉₀₀) | | |
| **Sample 3** | Very thick, sauce like | Thick |
| 0.7% fibre (TP₉₀₀) | | |

### Example 3

To instant asparagus soup base (Knorr Spargelcreme Suppe weiß & grun; powder) that contained vegetable pieces different texturizing ingredients were added, i.e.
- Sample 4 - native potato starch
- Sample 5 - the texturizing particles (TP₉₀₀) of Example 1.
- Sample 6 - citrus fibres (Herbacel AQplus type N, from Herba food)

The instant soup was whisked into cold water and brought to boil. The soup was allowed to simmer for 5-6 minutes, before being evaluated by an expert panel. The results of the evaluation are shown in Table 4.

**Table 4**

| | **Appearance** | **Mouthfeel** |
|---|---|---|
| **Reference 2** | Thin, small flakes | Thin, not bound |
| No addition | | |
| 0.0% starch ¹ | | |
| 0.0% fibre ² | | |
| **Sample 4** | Thick, not very smooth, small flakes | Nicely bound |
| 1.58% starch ¹ | | |
| **Sample 5** | Smooth, no flakes, slightly thinner than sample 2 | Nicely bound |
| 0.7% fibre(TP₉₀₀) ² | | |
| **Sample 6** | Thin, smooth | Thin, not bound, particles noticeable |
| 0.7% fibre ¹ | | |

| | | |
|---|---|---|
| ¹ concentration in reconstituted product ² concentration of citrus fibre in reconstituted product | | |

### Example 4

Texturizing particles were prepared as in Example 1, except that this time the homogenization was carried out at 250 bar. The performance of these texturizing particles (TP₂₅₀) were compared with that of the texturizing particles of Examples 1 (TP₉₀₀) and with that of non-homogenized citrus fibres.

To this end TP₉₀₀, TP₂₅₀ and citrus fibres (Herbacel AQplus type N, from Herba food) were added to instant asparagus soup without vegetable pieces. The instant soups that were used as references contained 14.4 wt.% of native potato starch (18.4 g base mix, 3.1 g starch, Reference 3) or 7.8 wt.% of starch (18.4 g base mix, 1.55 g starch, Reference 4). The other instant soups contained only 7.3 wt.% of the same native potato starch.

The instant soup was whisked into 200 ml cold water and brought to boil. The soup was allowed to simmer for 5-6 minutes, before being evaluated by an expert panel. The results of the evaluation are shown in Table 5.

**Table 5**

| | **Appearance** | **Mouthfeel** |
|---|---|---|
| **Reference 3** | OK, some lumps | OK, slightly thick |
| 1.55% starch ¹ | | |
| **Reference 4** | Thin, less lumps | Thin, watery |
| 0.775% starch ¹ | | |
| **Sample 7** | Smooth, a bit thin | Smooth, thicker than Reference 2 |
| 0.775% starch ¹ | | |
| 0.3% fiber (TP₉₀₀)² | | |
| **Sample 8** | Thick, a bit less smooth than sample 7 | Thick, sauce-like |
| 0.775% starch | | |
| 0.7% fiber (TP₉₀₀) ² | | |
| **Sample 9** | Thin | Thin, particles perceptible on tongue (sandy) |
| 0.775% starch | | |
| 0.7% fiber ² | | |
| **Sample 10** | Thick, some lumps, coarse structure | Thick |
| 0.775% starch | | |
| 0.7% fiber (TP₂₅₀) ² | | |

| | | |
|---|---|---|
| ¹ concentration by weight of water in reconstituted product ² concentration of citrus fibre in reconstituted product | | |

### Example 6

Dried powders comprising particles composed of MFC-containing citrus fibre and maltodextrin (w/w ≈ 1:2) were prepared by means of spray drying and oven drying. Citrus fibre (Herbacel AQplus type N, from Herba food) and maltodextrin (MD20P, ex AVEBE) were dispersed in water (20°C) using a Silverson L4 RT mixer to prepare an aqueous suspension containing 1.5 wt.% citrus fibre and 3.0 wt.% maltodextrin (MD20). Batches of 2 or 3 kg were made using a wide 5L plastic beaker. Next, the suspension was split into three and two of the three suspensions were homogenized at different pressures, i.e. at 210 bar and 500 bar using a table top homogeniser type Panda NS2002H.

Each of the three suspensions was split in two, following which one suspension was spray dried (Production Minor, using a two fluid nozzle with 0.8 mm opening both from GEA Niro Denmark Mono pump Nemo NM005BY06S12B ex Netzsch) whereas the other was oven dried (in 10 tray heated drying cabinet with forced air flow from Mitchell Dryers Ltd England). Thus three spray dried powders (TP_{refSD}, TP_{210SD} and TP_{500SD}) and three oven dried powders (TP_{refOD}, TP_{210OD} and TP_{500OD}) were obtained.

The spray drying conditions are summarized in Table 6.

**Table 6**

| | |
|---|---|
| Inlet temperature | 175 °C |
| Atomising pressure of the nozzle | 3 bar |
| Outlet temperature | 70°C |

### Oven drying:

The wet suspensions were spread on baking paper on metal tray's. After 6 h the suspension formed a dry film on the paper. The film was broken in pieces and stored. The dry pieces were milled using a Warring blender in 1L glass beaker with 10sec low speed bursts. The powder was sieved using a 500µm Retsch sieve, giving two fractions [> 500µm and < 500µm].
Fraction >500 µm was milled and sieved again till enough powder of fraction <500µm was made for sensory testing. The particle size distributions of the oven dried powders were determined by means of laser diffraction. The median diameters (D50) of the powders are listed in Table 7.

**Table 7**

| | **D50** |
|---|---|
| **TP_{refOD}** | 321 |
| **TP_{210OD}** | 288 |
| **TP_{500OD}** | 264 |

### Example 7

The dried powders (6.26 grams) of Example 6 were whisked into 200 ml cold, brought to boil and allowed to simmer for 6-7 minutes with occasional stirring.

The aqueous suspensions so obtained were evaluated by a panel. The results of the evaluation are summarized in the Table 9.

**Table 9**

| **Sample** | **Powder** | **Observations** |
|---|---|---|
| **Reference 5** | **TP_{refSD}** | Very sandy, watery, not smooth. Particles can be chewed. |
| **Reference 6** | **TP_{refOD}** | Many, large chewable particles |
| **Sample 11** | **TP_{210SD}** | Less sandy and more smooth than A |
| **Sample 12** | **TP_{210OD}** | Less particles and more smooth than B |
| **Sample 13** | **TP_{500SD}** | Very smooth and very few detectable particles. Particles are soft. |
| **Sample 14** | **TP_{500OD}** | Very smooth and few detectable particles. Particles are soft. |

### Example 8

The average orientation of cellulose microfibrils (from citrus fiber) in the dried powders of Example 7 was determined as described below.

The powders were dispersed into demineralized water in a concentration that corresponds to 0.1% wt citrus fibre. A volume of 2 mL of each sample was taken with a Finn pipette (Labsystems 4500, H37095) and deposited in a 2 mL Eppendorf safelock tube. To this 20 µL of a 0.5 w/v % aqueous solution of direct yellow dye was added with a Finn pipette (Labsystems 4027, H56580). The samples were gently shaken to distribute the dye.

For imaging, a sample holder was filled with the dyed sample material. The sample holder consisted of two cover slides separated by a spacer. The spacer was a rectangular glass slide of 3 mm thick with a circular hole (0.5 cm diameter) in which the sample could be deposited.

Imaging was performed on a Leica TCS-SP5 confocal microscope in combination with a DMI6000 inverted microscope frame. The Laser (405 Diode, UV) laser emitting at 405nm was used at a fixed laser power of 25% for imaging with the direct yellow dye. For detection, the system is equipped with PMT (photomultiplier tube) detector at 455nm - 558nm.

Images were taken at one magnification: at 40x magnification with an oil-immersed 40x with a numerical aperture of 1.25 (section thickness 0.968 µm) using Leica Immersion oil without auto fluorescence conforming to DIN 58884/ISO 8036/1. At 40x magnification a tile scan of 25 by 25 images at a single depth was performed to yield 25 non-overlapping images. Care was taken not to image the edges of the sample holder; images were taken at a few micrometres distance from the edge.

The PMT was adjusted by using the "smart gain" options to prevent over-saturation of the images. It was adjusted such that between 0.0 and 4% of the pixels are saturated. The resolution of the images was set to 1024 by 1024 pixels and a line averaging of 3 was used. Each pixel represented a sample area of 378.8 by 378.8 nm for 40x magnification. After imaging, the individual pictures that make up the tile scan were exported as tiff files with a colour depth of 24bit RGB without incorporating any scale bar (the reconstructed larger tile images were not used in the image analysis).

A method originally developed Boudaoud et al. (FibrilTool, an ImageJ plug-in to quantify fibrillar structures in raw microscopy images, Nature Protocols, 2014, 9(2), 457-463) based on the concept of nematic tensor, can provide a quantitative description of the anisotropy of fiber arrays and their average orientation in cells, directly from raw images obtained by any form of microscopy. Here with a small modification we use it to quantify the anisotropy of the fibril network within the particles structure. For image analysis the program ImageJ (freeware downloadable from: http://rsbweb.nih.gov/ij/) was used along with its extra plugin fibril tool (http://www.nature.com/nprot/journal/v9/n2/extref/nprot.2014.024-S3.txt) together with Microsoft Excel.

The analysis method consists of the following steps:
Microscopic pictures are inserted to ImageJ by drag and drop
- double click on the Fibril Tool to select the color channels
- select the area of an individual particle by using the polygon tool
- then click on the area of a particle by using the Tool
- repeat the process for the rest of the particles under investigation. The process was performed for at least 10 particles per microscopic picture.

The log output gives the average properties of the region
- image title
   ∘ cell number
- x-coordinate of region centroid (scaled)
   ∘ y-coordinate of region centroid (scaled)
   ∘ area (scaled)
- nematic tensor
   ∘ average orientation (angle in -90:90 in degrees)
   ∘ quality of the orientation (score between 0 and 1)
- The results are drawn on an overlay
- coordinates of polygon vertices for record

The above procedure was repeated for at least thirty randomly chosen microscopic pictures per sample.

The log output tables from the individual pictures were inserted into cells on excel software and the data where further processed as following:
- The values of the quality of the orientation were summed and the summed value was divided by the sum area (scaled) value.
- The value of this operation is herein provided as average orientation parameter.

The results are shown in Table 10.

**Table 10**

| **Sample** | **Powder** | **Average orientation** |
|---|---|---|
| **Reference 5** | TP_{refSD} | 5.04×10^-6 |
| **Reference 6** | TP_{refOD} | 6.54×10^-6 |
| **Sample 11** | TP_{210SD} | 4.56×10^-6 |
| **Sample 12** | TP_{210OD} | 4.06×10^-6 |
| **Sample 13** | TP_{500SD} | 2.42×10^-6 |
| **Sample 14** | TP_{500OD} | 0.285×10^-6 |

### Example 9

Texturizing particles comprising MFC-containing citrus fibre and sucrose in different weight ratios (2:1; 1:1; 1:5 and 1:10) were prepared by means of spray drying.

Citrus fibre (Herbacel AQplus type N, from Herba food), sucrose and calcium phosphate were dispersed in demineralized water (20°C) using a Silverson mixer to prepare an aqueous suspensions containing 1.5 wt.% citrus fibre. The compositions of these suspension are shown in Table 11.

**Table 11**

| | **Wt.%** | | | |
|---|---|---|---|---|
| | TP_{2:1} | TP_{1:1} | TP_{1:5} | TP_{1:10} |
| Citrus fibre | 1.50 | 1.50 | 1.50 | 1.50 |
| Sucrose | 0.75 | 1.50 | 7.50 | 15.00 |
| Calcium phosphate | 0.15 | 0.15 | 0.15 | 0.15 |
| Demineralized water | 97.60 | 96.85 | 90.85 | 83.35 |

Next, the suspensions were processed (one pass), using a lab scale microfluidizer (Microfluidics M 110S equipped with a 87 µm G-10Z interaction chamber) at 1000 bar.

The dispersions so obtained were spray dried using a Niro Mobile Minor, equipped with a 0.5mm two-fluid nozzle having an atomising pressure of 2 bars with an inlet temperature of 160°C. Throughput of the slurry was 1-1.5 kg/hr. The air inlet air temperature was controlled in such a way that the outlet air temperature was about 60°C.

The particle size distributions of the spray dried powders were determined after homogeneously dispersing these powders in distilled water of 20°C using laser diffraction measurements (Mastersizer 2000 ex Malvern Instr., Malvern, UK) and a refractive index of 1.469. The results are summarized in Table 12.

**Table 12**

| | **TP_{2:1}** | **TP_{1:1}** | **TP_{1:5}** | **TP_{1:10}** |
|---|---|---|---|---|
| D[3,2] | 23 µm | 25 µm | 26 µm | 29 µm |
| D[4,3] | 29 µm | 32 µm | 55 µm | 42 µm |
| D90 | 48 µm | 53 µm | 75 µm | 73 µm |
| D50 | 27 µm | 29 µm | 30 µm | 34 µm |
| D10 | 13 µm | 14 µm | 13 µm | 15 µm |

## Claims

1. A particulate instant food product comprising 1-99 wt.% of texturizing particles having a diameter in the range of 0.5-5,000 micrometer and comprising:
• at least 3 wt.% of microfibrillated cellulose (MFC);
• at least 20 wt.% of water-soluble filler; and
• less than 12 wt.% water;
wherein the MFC and the water-soluble filler together represent at least 40 wt.% of the texturizing particles.

2. Food product according to claim 1, wherein the food product contains 3-50 wt.% of salt selected from sodium chloride, potassium chloride and combinations thereof.

3. Food product according to claim 1 or 2, wherein the food product is selected from instant soup, instant sauce, instant gravy and instant bouillon.

4. Food product according to any one of the preceding claims, wherein the MFC originates from parenchymal tissue from fruits, roots, bulbs, tubers, seeds, stalks or a combination thereof.

5. Food product according to any one of the preceding claims, wherein the water-soluble filler is selected from maltodextrin, sucrose, lactose, glucose, fructose, pectin, starch, salt, monosodium glutamate, sodium citrate and combinations thereof.

6. Food product according to any one of the preceding claims, wherein the water-soluble filler is selected from maltodextrin, sucrose, lactose, glucose, fructose and combinations thereof.

7. Food product according to any one of the preceding claims, wherein the texturizing particles contain at least 5 wt.% of MFC and at least 30 wt.% of water-soluble filler.

8. Food product according to any one of the preceding claims, wherein the food product comprises 3-60 wt.%, more preferably 5-50 wt.% of the texturizing particles.

9. Food product according to any one of the preceding claims, wherein the combination of MFC and water-soluble filler constitutes at least 50 wt.%, more preferably at least 70 wt.% of the texturizing particles.

10. Food product according to any one of the preceding claims, wherein the MFC and the water-soluble filler form an intimate mixture within the texturizing particles.

11. Food product according to any one of the preceding claims, wherein the texturizing particles have an average orientation of less than 4.2×10^-6.

12. Food product according to any one of the preceding claims, wherein the food product contains at least 0.5 wt.% of texturizing particles having a diameter in the range of 0.5-50 micrometer

13. Food product according to any one of the preceding claims, wherein the food product contains at least 1 wt.% of texturizing particles having a diameter of at least 50-10,000 micrometer.

14. A process of preparing a particulate instant food product according to any one of the preceding claims, said process comprising:
• providing texturizing particles having a diameter in the range of 0.5-5,000 micrometer and comprising at least 5 wt.% of MFC; at least 20 wt.% of water-soluble filler; and less than 12% water; wherein the MFC and the water-soluble filler together represent at least 40 wt.% of the texturizing particles; and
• mixing the texturizing particles with one or more other particulate edible ingredients.

15. Use of a particulate instant food product according to any one of claims 1-12 in the preparation of an aqueous foodstuff, said use comprising mixing 1 part by weight of said particulate instant food product with at least 2 parts by weight of aqueous liquid.

## Patentansprüche

1. Teilchenförmiges Instant-Lebensmittel, umfassend 1-99 Gew.-% texturierende Teilchen, die einen Durchmesser in dem Bereich von 0,5-5.000 Mikrometern aufweisen und umfassen:
• mindestens 3 Gew.-% mikrofibrillierte Cellulose (MFC);
• mindestens 20 Gew.-% wasserlöslichen Füllstoff; und
• weniger als 12 Gew.-% Wasser;
• wobei die MFC und der wasserlösliche Füllstoff zusammen mindestens 40 Gew.-% der texturierenden Teilchen darstellen.

2. Lebensmittel nach Anspruch 1, wobei das Lebensmittel 3-50 Gew.-% Salz enthält, ausgewählt aus Natriumchlorid, Kaliumchlorid und Kombinationen davon.

3. Lebensmittel nach Anspruch 1 oder 2, wobei das Lebensmittel aus Instant-Suppe, Instant-Soße, Instand-Bratensoße und Instant-Bouillon ausgewählt ist.

4. Lebensmittel nach irgendeinem der vorhergehenden Ansprüche, wobei die MFC von Parenchymgewebe von Früchten, Wurzeln, Zwiebeln, Knollen, Samen, Stängeln oder einer Kombination davon stammt.

5. Lebensmittel nach irgendeinem der vorhergehenden Ansprüche, wobei der wasserlösliche Füllstoff aus Maltodextrin, Saccharose, Lactose, Glucose, Fructose, Pektin, Stärke, Salz, Mononatriumglutamat, Natriumcitrat und Kombinationen davon ausgewählt ist.

6. Lebensmittel nach irgendeinem der vorhergehenden Ansprüche, wobei der wasserlösliche Füllstoff aus Maltodextrin, Saccharose, Lactose, Glucose, Fructose und Kombinationen davon ausgewählt ist.

7. Lebensmittel nach irgendeinem der vorhergehenden Ansprüche, wobei die texturierenden Teilchen mindestens 5 Gew.-% MFC und mindestens 30 Gew.-% wasserlöslichen Füllstoff enthalten.

8. Lebensmittel nach irgendeinem der vorhergehenden Ansprüche, wobei das Lebensmittel 3-60 Gew.-%, bevorzugter 5-50 Gew.-% texturierende Teilchen umfasst.

9. Lebensmittel nach irgendeinem der vorhergehenden Ansprüche, wobei die Kombination von MFC und wasserlöslichem Füllstoff mindestens 50 Gew.-%, bevorzugter mindestens 70 Gew.-% der texturierenden Teilchen ausmacht.

10. Lebensmittel nach irgendeinem der vorhergehenden Ansprüche, wobei die MFC und der wasserlösliche Füllstoff innerhalb der texturierenden Teilchen eine innige Mischung bilden.

11. Lebensmittel nach irgendeinem der vorhergehenden Ansprüche, wobei die texturierenden Teilchen eine mittlere Ausrichtung von weniger als 4,2×10^-6 aufweisen.

12. Lebensmittel nach irgendeinem der vorhergehenden Ansprüche, wobei das Lebensmittel mindestens 0,5 Gew.-% texturierende Teilchen mit einem Durchmesser in dem Bereich von 0,5-50 Mikrometern enthält.

13. Lebensmittel nach irgendeinem der vorhergehenden Ansprüche, wobei das Lebensmittel mindestens 1 Gew.-% texturierende Teilchen mit einem Durchmesser von mindestens 50-10.000 Mikrometern enthält.

14. Verfahren zur Herstellung eines teilchenförmigen Instant-Lebensmittels nach irgendeinem der vorhergehenden Ansprüche, wobei das Verfahren umfasst:
• Bereitstellen von texturierenden Teilchen, die einen Durchmesser in dem Bereich von 0,5-5.000 Mikrometern aufweisen und mindestens 5 Gew.-% MFC, mindestens 20 Gew.-% wasserlöslichen Füllstoff und weniger als 12% Wasser umfassen; wobei die MFC und der wasserlösliche Füllstoff zusammen mindestens 40 Gew.-% der texturierenden Teilchen darstellen; und
• Mischen der texturierenden Teilchen mit einem oder mehreren anderen teilchenförmigen essbaren Zutaten.

15. Verwendung eines teilchenförmigen Instant-Lebensmittels nach irgendeinem der Ansprüche 1-12 zur Herstellung eines wässrigen Lebensmittels, wobei die Verwendung Mischen von 1 Gewichtsteil des teilchenförmigen Instant-Lebensmittels mit mindestens 2 Gewichtsteilen wässriger Flüssigkeit umfasst.

## Revendications

1. Produit alimentaire instantané particulaire comprenant 1-99 % en masse de particules texturantes ayant un diamètre dans l'intervalle de 0,5-5 000 micromètres et comprenant :
• au moins 3 % en masse de cellulose microfibrillée (MFC) ;
• au moins 20 % en masse de charge soluble dans l'eau ; et
• moins de 12 % en masse d'eau ;
dans lequel la MFC et la charge soluble dans l'eau représentent ensemble au moins 40 % en masse des particules texturantes.

2. Produit alimentaire selon la revendication 1, dans laquelle le produit alimentaire contient 3-50 % en masse de sel choisi parmi le chlorure de sodium, le chlorure de potassium et des combinaisons de ceux-ci.

3. Produit alimentaire selon la revendication 1 ou 2, dans lequel le produit alimentaire est choisi parmi une soupe instantanée, une sauce instantanée, un jus de viande instantané et un bouillon instantané.

4. Produit alimentaire selon l'une quelconque des revendications précédentes, dans lequel la MFC provient de tissus parenchymateux de fruits, racines, bulbes, tubercules, graines, tiges ou d'une combinaison de ceux-ci.

5. Produit alimentaire selon l'une quelconque des revendications précédentes, dans lequel la charge soluble dans l'eau est choisie parmi la maltodextrine, le saccharose, le lactose, le glucose, le fructose, la pectine, l'amidon, le sel, le glutamate de monosodium, le citrate de sodium et des combinaisons de ceux-ci.

6. Produit alimentaire selon l'une quelconque des revendications précédentes, dans lequel la charge soluble dans l'eau est choisie parmi la maltodextrine, le saccharose, le lactose, le glucose, le fructose et des combinaisons de ceux-ci.

7. Produit alimentaire selon l'une quelconque des revendications précédentes, dans lequel les particules texturantes contiennent au moins 5 % en masse de MFC et au moins 30 % en masse de charge soluble dans l'eau.

8. Produit alimentaire selon l'une quelconque des revendications précédentes, dans lequel le produit alimentaire comprend 3-60 % en masse, encore mieux 5-50 % en masse des particules texturantes.

9. Produit alimentaire selon l'une quelconque des revendications précédentes, dans lequel la combinaison de MFC et de charge soluble dans l'eau constitue au moins 50 % en masse, encore mieux au moins 70 % en masse des particules texturantes.

10. Produit alimentaire selon l'une quelconque des revendications précédentes, dans lequel la MFC et la charge soluble dans l'eau forment un mélange intime dans les particules texturantes.

11. Produit alimentaire selon l'une quelconque des revendications précédentes, dans lequel les particules texturantes présentent une orientation moyenne inférieure à 4,2 x 10^-6.

12. Produit alimentaire selon l'une quelconque des revendications précédentes, dans lequel le produit alimentaire contient au moins 0,5 % en masse de particules texturantes ayant un diamètre dans l'intervalle de 0,5-50 micromètres.

13. Produit alimentaire selon l'une quelconque des revendications précédentes, dans lequel le produit alimentaire contient au moins 1 % en masse de particules texturantes ayant un diamètre d'au moins 50-10 000 micromètres.

14. Procédé de préparation d'un produit alimentaire instantané particulaire selon l'une quelconque des revendications précédentes, ledit procédé comprenant :
• la fourniture de particules texturantes ayant un diamètre dans l'intervalle de 0,5-5 000 micromètres et comprenant au moins 5 % en masse de MFC ; au moins 20 % en masse de charge soluble dans l'eau ; et moins de 12 % d'eau ; dans lequel la MFC et la charge soluble dans l'eau représentent ensemble au moins 40 % en masse des particules texturantes ; et
• le mélange des particules texturantes avec un ou plusieurs autres ingrédients comestibles particulaires.

15. Utilisation d'un produit alimentaire instantané particulaire selon l'une quelconque des revendications 1-12 dans la préparation d'un aliment aqueux, ladite utilisation comprenant le mélange de 1 partie en masse dudit produit alimentaire instantané particulaire avec au moins 2 parties en masse de liquide aqueux.
